Europäisches Patentamt

European Patent Office

Office européen des brevets

(11) Numéro de publication: **0 387 165**

**A1**

## (12) DEMANDE DE BREVET EUROPEEN

(21) Numéro de dépôt: **90420116.7**

(22) Date de dépôt: **06.03.90**

(51) Int. Cl.⁵: **A01N 57/20, A01N 25/34**

(30) Priorité: **07.03.89 FR 8903207**

(43) Date de publication de la demande:
**12.09.90 Bulletin 90/37**

(84) Etats contractants désignés:
**AT BE CH DE DK ES FR GB GR IT LI LU NL SE**

(71) Demandeur: **RHONE-POULENC AGROCHIMIE**
**14-20, rue Pierre Baizet**
**F-69009 Lyon(FR)**

(72) Inventeur: **Darchy, Francois**
**14 Bis, Rue de Tourvielle**
**F-69005 Lyon(FR)**

(74) Mandataire: **Brachotte, Charles et al**
**RHONE-POULENC AGROCHIMIE P.I.D. BP**
**9163**
**F-69263 Lyon Cedex 09(FR)**

(54) **Nouveaux combines herbicides.**

(57) Combiné herbicide prêt à l'emploi comprenant un sac constitué d'un polymère, solide et souple à l'état sec et hydrosoluble, ledit combiné étant caractérisé en ce que ledit sac est fermé et contient une composition herbicide solide comprenant de la N-phosphonométhylglycine ou l'un de ses sels de sodium ou de potassium, ladite composition étant sous forme de poudre mouillable.

EP 0 387 165 A1

## NOUVEAUX COMBINES HERBICIDES

La présente invention concerne un nouveau combiné herbicide prêt à l'emploi ainsi que son utilisation.

Depuis bien des années; on a beaucoup utilisé les herbicides non sélectifs, soit pour les applications dites industrielles ou les espaces publics, routes, chemins de fer et autres, soit pour les cultures. Dans ce dernier cas, on utilise de préférence des herbicides à faible toxicité pour les cultures dans le but, notamment, de diminuer le labourage. L'herbicide est alors appliqué à une période où il n'est pas susceptible de causer des dommages substantiels à la culture, par exemple peu avant ou peu après la récolte.

Parmi les herbicides largement développés, il y a ceux décrits dans les brevets US 3 799 758 et français 2129327 qui sont les dérivés de la N-(phosphonomethyl)glycine (appelée également glyphosate). Bien que ces brevets décrivent un grand nombre de dérivés y compris l'acide lui-même, seul le sel d'isopropylammonium a donné lieu à des utilisations nombreuses, abondantes et commerciales.

Il y a par ailleurs un besoin qui devient de plus en plus pressant en rapport avec la protection de l'environnement, c'est celui d'éliminer la pollution due aux emballages de pesticides. En effet, lorsque les agriculteurs ont utilisé un récipient contenant un pesticide, ce récipient n'est en général jamais vidé entièrement, et il est assez fréquent que les agriculteurs laissent ces récipients vides à l'abandon. Ces récipients abandonnés contenant encore du pesticide constituent un risque de pollution aussi bien pour les personnes, les animaux, l'environnement, les eaux, et autres.

Bien que la N-(phosphonomethyl)glycine et ses dérivés soient considérés comme peu toxiques, il n'en reste pas moins qu'ils sont des facteurs de pollution, surtout quand ils sont manipulés avec une certaine négligence comme cela est malheureusement trop fréquent dans la pratique.

Un but de l'invention est de diminuer les facteurs de pollution précités

Il est également souhaitable de diminuer les risques de pollution liés à la manipulation de pesticides en éliminant le contact direct de ces pesticides avec ceux qui les manipulent, aussi bien les fabricants que les transporteurs et les agriculteurs

Il est aussi désirable d'éliminer, dans la mesure du possible les récipients contenant directement les produits pesticides sans pour autant augmenter le contact direct des pesticides avec ceux qui les manipulent.

Pour résoudre ces problèmes, on a proposé les plastiques (ou polymères) hydrosolubles, c'est-à-dire solubles dans l'eau.

Le glyphosate d'isopropylammonium étant très soluble dans l'eau, il aurait pu, par cela même, paraitre fort approprié à l'usage avec des plastiques hydrosolubles. Cependant il apparait dans la pratique des difficultés liées au fait que ce sel est mal cristallisable et qu'il n'est donc guère utilisable directement en tant que poudre destinée à remplir des sachets plastiques. Bien entendu la formulation habituelle de ce sel, qui est une solution aqueuse du glyphosate d'isopropyl ammonium est encore moins apte à être mise dans des sachets hydrosolubles , puisqu'elle dissoudrait immédiatement lesdits sachets avant toute utilisation.

Un but de la présente invention est de résoudre les problèmes précités.

Un autre but de l'invention est de fournir des herbicides propres vis-à-vis de l'environnement.

Un autre but de l'invention est de fournir des herbicides totaux et/ou non sélectifs prêts à l'emploi. Un autre but le l'invention est de fournir des herbicides totaux sous une forme manipulable commodément et en sécurité par les utilisateurs.

Un autre but de l'invention est de fournir des combinés herbicides constitués de sacs ou sachets hydrosolubles contenant une composition pesticide facile à réaliser et facile à utiliser pour le remplissage desdits sachets.

Un autre but de l'invention est de fournir des combinés aisément hydrodispersables dans lesquels la matière active herbicide est aisément et directement mélangeable à d'autres ingrédients habituels pour constituer la composition devant remplir les sacs. Ce problème est en effet particulièrement aigu avec le glyphosate - sel d'isopropylammonium qui est soluble dans l'eau et donc très hydrophile, alors que divers autres herbicides sont difficilement compatibles avec lui en raison notamment de leur faible solubilité dans l'eau. Or il se trouve qu'il est très souhaitable d'associer diverses matières actives au glyphosate dans le but, notamment, d'accélérer sa vitesse d'action et/ou d'élargir son spectre d'activité et/ou d'accroître sa rémanence (persistance d'action dans le temps). L'absence de compatibilité se traduit par la formation de mélanges pâteux non manipulables dans les conditions habituelles de manipulation.

Un but de l'invention est donc de permettre d'associer le glyphosate à diverses matières actives herbicides.

D'autres buts et avantages de l'invention apparaitront encore au cours de la description qui va suivre.

L'invention concerne donc un combiné herbicide prêt à l'emploi comprenant un sac (ou sachet) constitué d'un polymère, solide à l'état sec et hydrosoluble, ledit combiné étant caractérisé en ce que ledit sac est fermé et contient une composition herbicide comprenant de la N-phosphonométhylglycine ou l'un de ses sels de sodium ou de potassium, ladite composition étant sous forme de poudre mouillable (solide).

La N-phosphonomethylglycine (ou glyphosate) est un triacide.

Sauf indication expresse contraire, les pourcentages mentionnés dans le présent exposé de l'invention sont des pourcentages en poids.

Les sacs mis en oeuvre dans l'invention ont généralement une capacité leur permettant de contenir entre 0,1 kg et 10 kg de composition herbicide, de préférence entre 0,5 kg et 5 kg. Selon une modalité préférée de l'invention, les sacs sont pleins des compositions herbicides mises en oeuvre.

Les parois des sacs mises en oeuvre dans l'invention sont solides comme il a déjà été dit, mais elle sont avantageusement souples. Elles ont une épaisseur généralement comprise entre 20 et 100 microns, de préférence entre 30 et 60 microns. Ces sacs comprennent généralement au moins une bordure fermée par soudure.

Les polymères hydrosolubles pouvant constituer les sacs utilisés dans l'invention sont des produits connus en soi. Comme polymères hydrosolubles on peut citer principalement les polymères d'alcool vinylique, notamment lorsqu'ils sont plastifiés avec des polyols. D'autres polymères peuvent aussi être éventuellement utilisables dans la mesure où ils sont solides à l'état sec et solubles dans l'eau, par exemple la méthylcellulose ou des copolymères d'oxyde d'éthylène, les polymères de vinyl pyrrolidone, ou d'acétate de vinyle, la gélatine, le carboxylméthyl cellulosse, la dextrine, l'hydroxyéthyl cellulose, la méthyl cellulose associés à des polyols, tels qu'éthylène glycol, propylène glycol, glycerol, sorbitol. En général les combinés selon l'invention présentent une certaine fragilité qui rend préférable de mettre lesdits combinés dans des récipients externes moins fragiles. Ces récipients peuvent être en matériau très peu cher comme le carton ou l'aluminium en raison des contraintes modérées auxquelles il est soumis. La présence de ce récipient externe n'est pas un facteur de pollution dans la mesure où ce récipient ne contient pas lui-même directement des pesticides et qu'il n'est pas polluant s'il est jeté.

Les compositions herbicides solides remplissant les sacs selon l'invention peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, etc...ainsi que d'autres matières actives connues à propriétés pesticides (notamment insecticides, fongicides ou herbicides) ou à propriétés régulatrices de la croissance des plantes. Plus généralement les composés utilisés dans l'invention peuvent être associés à tous les additifs solides ou liquides correspondant aux techniques habituelles de la mise en formulation. Des compositions comprenant 0,1 à 70 % de sel d'ammonium (NH4+), notamment le sulfate, et de préférence 10 à 30 %, sont particulièrement avantageuses.

Comme matière herbicides pouvant être mélangée au dérivés du glyphosate dans les sacs des combinés selon l'invention, on peut citer l'acifluorfen, l'aclonifen, le bifenox, le diflufenican, l'asulam, les triazines (notamment la simazine et l'atrazine), le diuron et l'oxadiazon, les herbicides de types hormone ou phénoxy, notamment le 2,4-D,[2,4-DB,]MCPP, les hydroxybenzonitriles (notamment le bromoxynil et l'ioxynil), les imidazolinones (notamment l'imazaquin et l'imazapur), les sulfonylurées (notamment le chlorsulfuron et le metsulfuron). Les noms qui précèdent sont des noms normalisés pour désigner les herbicides. Ces herbicides sont le plus souvent utilisés à raison de 1 à 400 parties en poids pour 100 parties de glyphosate ou d'équivalent glyphosate. En utilisant le terme équivalent glyphosate on ramène ainsi le calcul des parties comme si tous les dérivés de glyphosate étaient sous forme de N-phosphonométhylglycine.

Plus précisément, lorsqu'on utilise des matières actives herbicides distinctes du glyphosate et mélangées au glyphosate les proportions suivantes sont généralement mises en oeuvre pour le rapport pondéral rp

$$\text{(rp est égal à } \frac{\text{glyphosate ou équivalent glyphosate}}{\text{autre herbicide}}$$

glyphosate + acifluorfen : $\frac{4}{100} \leq rp \leq \frac{9}{100}$

glyphosate + diuron ou oxadiazon : $2 \leq rp \leq 4$

glyphosate + aclonifen : $\frac{1}{3} \leq rp \leq \frac{10}{3}$

glyphosate + bifenox $\frac{1}{3} \leq rp \leq 1$

glyphosate + diflufenican $2 \leq rp \leq 20$
glyphosate + asulam : $\frac{1}{4} \leq rp \leq 1$
glyphosate + phénoxy : $\frac{2}{3} \leq rp \leq 4$
glyphosate + hydroxybenzonitrile : $1 \leq rp \leq 10$
glyphosate + triazine : $\frac{1}{3} \leq rp \leq 1$
glyphosate + imidazolinone $1 \leq rp \leq 4$
glyphosate + sulfonylurée : $\frac{100}{6} \leq rp \leq 100$

D'une façon générale, les compositions herbicides mises en oeuvre dans l'invention contiennent habituellement de 0,05 à 95 % environ d'une ou plusieurs matières actives herbicides , de 1 % à 95 % environ de un ou plusieurs supports solides et éventuellement de 0,1 à 50 % environ de un ou plusieurs agents tensioactifs.

Selon ce qui a déjà été dit les matières actives herbicides mises en oeuvre dans l'invention sont généralement associées à des supports et éventuellement des agents tensioactifs.

Par le terme "support", dans le présent exposé, on désigne une matière organique ou minérale, naturelle ou synthétique, avec laquelle la matière actives est associée pour faciliter son application sur la plante ou sur le sol. Ce support est donc généralement inerte et il doit être acceptable en agriculture, notamment sur la plante traitée. Le support est de préférence solide (argiles, silicates naturels ou synthétiques, silice, résines, cires, engrais solides, etc...).

L'agent tensioactif peut être un agent émulsionnant, dispersant ou mouillant de type ionique ou non ionique ou un mélange de tels agents tensioactifs. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés, des esters d'acides gras et de polyols, les dérivés à fonction sulfates, sulfonates et phosphates des composés précédents. La présence d'au moins un agent tensioactif est généralement indispensable lorsque le support inerte n'est pas ou peu soluble dans l'eau et que l'agent final vecteur de l'application d'herbicide par l'agriculteur est l'eau.

Les poudres mouillables (ou poudre à pulvériser) sont habituellement préparées de manière qu'elles contiennent 10 à 80 % de matière active, et elles contiennent habituellement, en plus du support solide, de 0 à 5 % d'un agent mouillant, de 3 à 10 % d'un agent dispersant, et, quand c'est nécessaire, de 0 à 80 % d'un ou plusieurs stabilisants et/ou autres additifs, comme des agents de pénétration, des sels organiques ou minéraux, de préférence le sulfate d'ammonium, des adhésifs, ou des agents antimottants, colorants, etc..

A titre d'exemple, on donne ci-après d'une part des exemples de diverses compositions de poudres mouillables utilisables dans les combinés de l'invention et d'autres part des exemples de réalisation et d'utilisation de combinés selon l'invention à partir desdites compositions. Dans ces exemples la matière active est de la N-(phosphonomethyl)glycine ou l'un de ses sels de sodium ou de potassium.

| EXEMPLE 1 : | |
|---|---|
| - matière active | 50 % |
| - lignosulfonate de calcium (défloculant) | 5 % |
| - isopropylnaphtalène sulfonate (agent mouillant anionique) | 1 % |
| - silice antimottante | 5 % |
| - kaolin (charge) | 39 % |

EXEMPLE 2 :

Un autre exemple de poudre mouillable à 25 % est donné ci-après :

| | |
|---|---|
| - matière active | 25 % |
| - amine aliphatique (C10 à C18) polyéthoxylée | 10 % |
| - alcool aliphatique (C8 - C18) polyéthoxylée | 10 % |
| - silice antimottante | 25 % |
| - kaolin | 30 % |

EXEMPLE 3 :

Un autre exemple de poudre mouillable est donné ci-après :

| | |
|---|---|
| -matière active | 25 % |
| -amine aliphatique (C10-18) polyéthoxylée | 10 % |
| -alcool aliphatique (C8-18) polyéthoxylé | 10 % |
| -sulfate d'ammonium | 20 % |
| -silice antimottante | 25 % |
| -kaolin | 10 % |

Pour obtenir ces poudres mouillables, on mélange intimement la ou les matières actives dans des mélangeurs appropriés avec les substances additionnelles éventuellement imprégnées sur la charge poreuse et on broie avec des moulins ou autres broyeurs appropriés.

| EXEMPLE 4 | |
|---|---|
| - glyphosate (acide) | : 25% |
| - amine (C10 à C-18) polyéthoxyléé | : 10 % |
| - alcool (C8 à C18) polyéthoxylé | : 10 % |
| - (NH4)2 SO4 | : 30 % |
| - silice antimottante | : 25% |

| EXEMPLE 5 | |
|---|---|
| - glyphosate (acide) | : 20 % |
| - acifluorfen (acide) | : 9 % |
| - alcool (C8 à C18) polyéthoxylé | : 12 % |
| - (NH4)2 SO4 | : 35 % |
| - silice antimottante | : 19 % |
| - Na2 CO3 | : 5 % |

| EXEMPLE 6 | |
|---|---|
| - glyphosate (sel de Na) | : 25 % |
| - oxadiazon | : 25 % |
| - lignosulfonate de calcium (dispersant) | : 5 % |
| - isopropylnaphtalène sulfonate de sodium (mouillant) | : 1 % |
| - silice antimottante | : 5 % |
| - kaolin | : 39 % |

| EXEMPLE 7 | |
|---|---|
| - glyphosate (sel de Na) | : 10 % |
| - aclonifen | : 20 % |
| - alcool (C8 - C18) polyéthoxylé | : 10 % |
| - (NH4)2 SO4 | : 25 % |
| - lignosulfonate de calcium (dispersant) | : 5 % |
| - silice antimottante | : 20 % |
| - kaolin | : 10 % |

EXEMPLE 8

Pour mesurer la coulabilité de la poudre, propriété nécessaire à son conditionnement dans les sachets hydrosolubles, on a effectué le test suivant :

Dans un entonnoir dont le diamètre inférieur est de 2,5 cm, on verse, en bouchant l'orifice d'écoulement, une quantité de 100 g de poudre telle que décrit dans les exemples précédents. On laisse ensuite écouler la poudre et on mesure le temps nécessaire du passage des 100 g.

Dans le cas de poudre fluente, c'est à dire de bonne coulabilité, ce temps doit être inférieur à 10 secondes.

Ce test a été appliqué aux formules décrites dans les exemples 4 à 7; les résultats sont les suivants :

Ex 4 : 5 secondes

5 : 6 secondes

6 : 5,5 secondes

7 : 7 secondes Ce test a été appliqué également à une formule solide préparée dérivée de l'exemple 4 mais en remplaçant le glyphosate sous forme acide par son sel d'isopropylammonium; dans ce cas, le produit colle au paroi de l'entonnoir et colmate rapidement l'orifice d'écoulement : ceci montre l'inaptitude de cette formulation de glyphosate à être conditionnée en sachet hydrosoluble.

EXEMPLE 9

Une kilogramme de la composition (poudre mouillable) de l'exemple 1 est mise dans un sac de contenance correspondante de manière à remplir ce sac. Ce sac en alcool polyvinylique (plastifié avec un polyol) avait initialement une forme rectangulaire et était fermé sur trois cotés. Le mélange des différents constituants de la composition s'est déjà effectué très aisément en raison de la nature de ces constituants; à son tour le remplissage avec la composition herbicide dans le sac s'effectue très aisément et sans difficulté en raison également de la nature de ses constituants. Le sac est alors fermé par soudure sur le dernier coté.

Ce sac plein qui constitue un combiné selon l'invention, est jeté dans 100 litres d'eau sous vive agitation . Le film du polymère disparait en deux minutes et la composition herbicide est dispersée totalement et de manière homogène dans la masse d'eau qui est ainsi prête pour son utilisation dans un pulvérisateur (sans bouchage) .

6

## EXEMPLE 10

L'exemple 9 est répété en remplaçant successivement la composition herbicide par chacune des compositions herbicides des exemples 2 et 3. Des résultats également bons sont obtenus.

## EXEMPLE 11

On remplit la cuve d'un pulvérisateur d'une capacité totale de 600 l avec 300 l d'eau. On jette ensuite 3 sacs contenant 4 kg d'herbicides correspondant à la composition de l'exemple 4. Le film de polymère disparait complètement après 2 minutes et la poudre commence à se disperser dans l'eau. On complète ensuite la cuve avec 300 l d'eau et on met en marche la pompe d'agitation pendant 2 minutes afin de finir de disperser le produit dans la cuve. On pulvérise ensuite la bouillie sur 3 ha de culture sans bouchage de buses.

**Revendications**

1 Combiné herbicide prêt à l'emploi comprenant un sac constitué d'un polymère, solide et souple à l'état sec et hydrosoluble, ledit combiné étant caractérisé en ce que ledit sac est fermé et contient une composition herbicide solide comprenant de la N-phosphonométhylglycine ou l'un de ses sels de sodium ou de potassium, ladite composition étant sous forme de poudre mouillable.

2 Combiné selon la revendication 1 caractérisé en ce que la composition herbicide est un mélange de
- A) N-phosphonométhylglycine ou l'un des sels de sodium ou potassium et
- B) un herbicide choisi dans le groupe constitué par l'acifluorfen, l'aclonifen, le bifenox, le diflufenican, l'asulam, les triazines (notamment la simazine et l'atrazine), le diuron et l'oxadiazon, les herbicides de types hormone ou phénoxy, notamment le 2,4-D,[2,4-DB,]MCPP, les hydroxybenzonitriles (notamment le bromoxynil et l'ioxynil), les imidazolinones (notamment l'imazaquin et l'imazapur), les sulfonylurées (notamment le chlorsulfuron et le metsulfuron).

3 Combiné selon la revendication 2 caractérisé en ce que l'herbicide phénoxy est choisi parmi le 2,4-D ou le 2,4-DB ou le MCPP; l'hydroxybenzonitrile est choisi parmi le bromoxynil et l'ioxynil; l'imidazolinone est choisie parmi l'imazaquin et l'imazapur; la sulfonylurée est choisie parmi le chlorsulfon ou le metsulfon.

4 Combiné selon l'une des revendications 2 ou 3 caractérisé en ce que l'herbicide B est utilisé à raison de 1 à 400 parties en poids pour 100 parties de glyphosate ou d'équivalent glyphosate.

5 Combiné selon la revendication 4 caractérisé en ce que le rapport pondéral rp = herbicide A/herbicide B est choisi dans l'une ou l'autre des inégalités suivantes glyphosate + acifluorfen : $\frac{4}{100} \leq rp \leq \frac{9}{100}$

glyphosate + diuron ou oxadiazon : $2 \leq rp \leq 4$
glyphosate + aclonifen : $\frac{1}{3} \leq rp \leq \frac{10}{3}$
glyphosate + bifenox $\frac{1}{3} \leq rp \leq 1$
glyphosate + diflufenican $2 \leq rp \leq 20$
glyphosate + asulam : $\frac{1}{4} \leq rp \leq 1$
glyphosate + phénoxy : $\frac{2}{3} \leq rp \leq 4$
glyphosate + hydroxybenzonitrile : $1 \leq rp \leq 10$
glyphosate + triazine : $\frac{1}{3} \leq rp \leq 1$
glyphosate + imidazolinone $1 \leq rp \leq 4$
glyphosate + sulfonylurée : $\frac{100}{6} \leq rp \leq 100$

6 Combiné selon l'une des revendications 1 à 5 caractérisé en ce que les compositions contenues dans des sacs hydrosolubles selon l'invention contiennent elles - mêmes de 0,05 à 95 % environ d'une ou plusieurs matières actives herbicides, de 1 à 95 % environ de un ou plusieurs supports solides et éventuellement de 0,1 à 50 % environ de un ou plusieurs agents tensioactifs.

7 Combiné selon la revendication 6 caractérisé en ce que la composition comprend 0,1 à 70 % de sel d'ammonium, de préférence le sulfate.

8 Combiné selon l'une des revendications 1, 6 ou 7 caractérisé en ce que la matière active herbicide est la N-phosphonométhylglycine

9 Combiné selon l'une des revendications 2 à 8 caractérisé en ce que les compositions contenues dans des sacs hydrosolubles selon l'invention contiennent elles-mêmes de l'acifluorfen ou.de la simazine ou du diuron ou de l'oxadiazon

10 Combiné selon l'une des revendications 1 à 9 caractérisé en ce que le polymère du sac est souple à l'état sec.

11 Combiné selon l'une des revendications 1 à 10 caractérisé en ce que le polymère est de l'alcool polyvinylique.

12 Combiné selon l'une des revendications 1 à 11 caractérisé en ce que les parois des sacs mises en oeuvre dans l'invention ont une épaisseur comprises entre 20 et 100 microns, de préférence entre 30 et 60 microns et que ces sacs ont au moins une bordure fermée par soudure.

13 Combiné selon l'une des revendications 1 à 12 caractérisé en ce que les combinés sont mis dans des récipients externes en carton ou aluminium

14 Combiné selon l'une des revendications 1 à 13 caractérisé en ce que le combiné contient 0,1 à 10 kg de composition herbicide.

15 Combiné selon la revendication 14 caractérisé en ce que le combiné contient 0,5 à 5 kg de composition herbicide.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | CHEMICAL PATENTS INDEX, BASIC ABSTRACTS JOURNAL, semaine 8520, 10 juillet 1985, section C, résumé no. 120188, Derwent Publications Ltd, Londres, GB; & JP-A-60 061 504 (TOKYO ORG. CHEM. IND. K.K.) 14-09-1983 * Résumé *<br>--- | 1-15 | A 01 N 57/20<br>A 01 N 25/34 |
| X | GB-A- 922 317 (ASSOCIATED FUMIGATORS LTD) * Page 1, lignes 17-24,32-51; page 2, lignes 3-19 *<br>--- | 1-15 | |
| X | WO-A-8 202 647 (THE WELLCOME FOUNDATION LTD) * Page 2, lignes 5-9; revendications 1-2 *<br>--- | 1-15 | |
| D,A | FR-A-2 129 327 (MONSANTO CO.) * Page 5, lignes 15-28; page 15, lignes 17-18,26; page 20, lignes 18-31; page 21, lignes 24-28,33; page 22, lignes 5,17,22 *<br>--- | 1-15 | DOMAINES TECHNIQUES RECHERCHES (Int. Cl.5)<br><br>A 01 N |
| A | WO-A-8 403 607 (CHEVRON RESEARCH CO.) * Page 11, lignes 39-40; revendications 1,9,11 *<br>----- | 1-15 | |

Le présent rapport a été établi pour toutes les revendications

| Lieu de la recherche | Date d'achèvement de la recherche | Examinateur |
|---|---|---|
| LA HAYE | 14-06-1990 | RAVANEL C.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................

 & : membre de la même famille, document correspondant

EPO FORM 1503 03.82 (P0402)